# EUROPÄISCHE PATENTANMELDUNG

(11) **EP 1 728 681 A1**
(43) Veröffentlichungstag der Anmeldung: **06.12.2006**
(21) Anmeldenummer: 06011365.1
(22) Anmeldetag: 01.06.2006
(51) Int. Cl.: B60Q 1/50, B60Q 1/52

(54) **Verfahren und Signalvorrichtung für Fahrzeuge zur Informationsübermittlung**

(30) Priorität: 01.06.2005 DE 102005025545
(71) Anmelder: Virginia Cremona, 78652 Deisslingen (DE)
(72) Erfinder: Cremona, Melchior, 78652 Deisslingen (DE)
(74) Vertreter: Patentanwälte Westphal, Mussgnug & Partner

(57) **Zusammenfassung**

Die Erfindung betrifft ein Verfahren und eine Signalvorrichtung für Fahrzeuge zur Informationsübermittlung von durch Analyse von Sensordaten eines Fahrzeugs (B) gewonnenen Informationen an ein nachfolgendes Fahrzeug (C) und/oder dessen Fahrzeugführer unter Verwendung einer Sensoreinrichtung, einer Einrichtung zur automatisierten Analyse der von der Sensoreinrichtung ermittelten Daten zur Gewinnung von Informationen aus diesen Daten und einer Signalausgabeeinrichtung zur Weitergabe der Informationen an den Fahrzeugführer oder die Steuerelektronik eines nachfolgenden Fahrzeugs.

## Beschreibung

Die Erfindung betrifft ein Verfahren und eine Signalvorrichtung für Fahrzeuge zur Informationsübermittlung an den nachfolgenden Straßenverkehr.

Bekannte Signalvcrrichtungen für Fahrzeuge zur Signalgebung an den nachfolgenden Verkehr sind Blinkereinrichtungen, Bremslichter oder Rückleuchten. Diese Einrichtungen dienen dazu, den nachfolgenden Verkehr auf Richtungsänderungen hinzuweisen, einen Bremsvorgang anzuzeigen oder beispielsweise das Einlegen des Rückwärtsganges zu signalisieren. Neben diesen üblichen Signalvorrichtungen, über die nahezu jedes Fahrzeug verfügt, sind weitere Signalvorrichtungen für Spezialfahrzeuge bekannt, wie z. B. das Blaulicht für die Polizei oder Signalvorrichtungen an öffentlichen Verkehrsmitteln, mit denen beispielsweise die Zielhaltestelle oder die Streckenführung des entsprechenden Verkehrsmittels bekannt gegeben wird.

Die oben geschilderten Signalvorrichtungen werden routinemäßig im Straßenverkehr eingesetzt und so auch von den Verkehrsteilnehmern wahrgenommen. Mit zunehmender verkehrsdichte kommt es jedoch immer häufiger zu Situationen, in denen die oben geschilderten konventionellen Einrichtungen zur Information des nachfolgenden Straßenverkehrs nicht mehr ausreichen. Solche Situationen treten besonders dann ein, wenn plötzlich Hindernisse auftauchen oder andere Situationen eintreten, die der nachfolgende Verkehr nicht klar oder gar nicht erkennen kann und ohne zusätzliches Signal falsch einschätzen würde. Eine falsche Einschätzung der Situation des Straßenverkehrs führt jedoch zwangsläufig zu Unfällen.

Es gibt bereits eine Reihe von Sensoreinrichtungen, mittels derer dem Fahrer eines Fahrzeugs bzw. der Fahrzeugelektronik des Fahrzeugs Informationen übermittelt werden, die zur Vermeidung gefährlicher Situationen dienen. Als Beispiele sind hier Abstandswarnsysteme, wie sie als Einparkhilfen oder insbesondere auch im Rahmen des "Distronic"-Systems von Daim-1er-Chrysler bekannt sind, zu nennen, aber auch wohlbekannte Systeme wie ABS oder ESP, die basierend auf aus dem Fahrverhalten des Fahrzeugs abgeleiteten Informationen automatisch geeignete Massnahmen initiieren.

Die von den jeweils zugehörigen Sensoreinrichtungen gewonnenen detaillierten Informationen werden bislang jedoch bestenfalls dem Fahrer des Fahrzeugs selbst verfügbar gemacht oder von der Regelelektronik des Fahrzeugs, das den Sensor trägt, verarbeitet.

Es besteht somit der Bedarf für Einrichtungen an Fahrzeugen, mit deren Hilfe die nachfolgenden Fahrzeuge mit Informationen über kritische Situationen im Straßenverkehr versorgt werden und mit denen es gelingt, kritische Situationen im Straßenverkehr zu entschärfen.

In der DE 103 03 116 A1 wird ein Hinweissystem an Fahrzeugen zur Signalgebung an nachfolgende Fahrzeuge beschrieben, das sich im Heckbereich eines Fahrzeuges befindet und im Wesentlichen aus einer Anzeigenplatte mit einer Möglichkeit zu einer Buchstabenbeschriftung oder zum Anzeigen von Symbolen besteht. Dieses Hinweissystem zur Information des Fahrers eines nachfolgenden Fahrzeugs kann beispielsweise mit dem Bremsvorgang oder mit dem Signals eines nach hinten gerichteten Abstandssensors koordiniert werden. Ein ähnliches System ist auch aus der US 4631516 bekannt. Es ist aber mit diesen Systemen nicht möglich, beispielsweise Informationen über ein vor einem mit dem Sensor ausgerüsteten Auto auftauchendes Hindernis an ein hinter diesem fahrendes Fahrzeug zu übermitteln.

Die Aufgabe der Erfindung besteht somit darin, ein Verfahren und eine Signalvorrichtung für Fahrzeuge zur Informationsübermittlung an den nachfolgenden Straßenverkehr zur Verfügung zu stellen.

Gelöst wird die Aufgabe durch eine Signalvorrichtung für Fahrzeuge zur Signalgebung an den nachfolgenden Straßenverkehr nach Anspruch 1 bzw. ein Verfahren für Fahrzeuge zur Signalgebung an den nachfolgenden Straßenverkehr nach Anspruch 12. Vorteilhafte Ausführungsformen und Weiterbildungen der Erfindung sind in den Unteransprüchen wiedergegeben.

Die erfindungsgemäße Signalvorrichtung für Fahrzeuge zur Signalgebung an den nachfolgenden Verkehr verfügt über einen in Fahrtrichtung gerichteten Sensor, eine Vorrichtung zur automatisierten Analyse der vom Sensor ermittelten Daten sowie eine Signalausgabeeinrichtung. Prinzipiell können neben Kraftfahrzeugen wie Autos oder Lastkraftwagen auch Wohnwagen, Anhänger, Motorräder, Fahrräder oder andere Fahrzeuge, die am Verkehr teilnehmen mit einer entsprechenden Signalvorrichtung ausgerüstet werden.

Die Signalausgabeeinrichtung dient zur Weiterleitung der durch den Sensor gewonnenen Informationen an die nachfolgenden Fahrzeuge oder die Fahrer dieser Fahrzeuge.

Es können optische oder akustische Sensoren zur Anwendung kommen, welche einen Abstand zu einem Hindernis, insbesondere zu einem vorausfahrenden oder zu einem nachfolgenden Fahrzeug erfassen und die Unterschreitung eines vorgegebenen oder vorgebbaren Mindestabstands als kritische Verkehrssituation identifizieren- Auch thermische Sensoren, wie z. B. Temperaturfühler, akustische Sensoren, Drucksensoren, oder aber auch Feuchtigkeitssensoren sind denkbar. So kann z.B. ein thermischer Sensor das überschreiten einer vorgegebenen oder vorgebbaren Temperatur des Motors, der Umgebung des Fahrzeugs oder dergleichen als kritische Verkehrssituation identifizieren. Ein akustischer Sensor kann das Überschreiten eines vorgegebenen Geräuschpegels z.B. aufgrund eines anomalen Fahrzustands ermitteln. Feuchtigkeitssensoxen bzw. Temperaturfühler können feststellen, ob die Fahrbahn nass ist und/oder ob Gefahr von Glatteis besteht. Der Temperaturfühler kann zusätzlich mit einer automatischen Schlupfregelung und/oder einem Antiblockiersystem ((ESP/ABS)-System) kombiniert sein, um Glatteis eindeutig identifizieren zu können und um beispielsweise bei Glatteis die Systeme automatisch zu aktivieren und bei Gefahr entsprechende Gegenmaßnahmen einzuleiten.

Das System kann auch eine Kamera oder ein Kamerasystem umfassen. Z.B. kann vorgesehen sein, dass die Kamera oder das Kamerasystem eingerichtet ist, die Umgebung des Fahrzeugs zu erfassen und anhand von Änderungen der Umgebung bzw. anhand der Geschwindigkeit der Änderung der Umgebung (ggf. unter Berücksichtigung der eigenen Fahrzeuggeschwindigkeit) einen kritischen Fahrzustand und/oder (ggf. infolgedessen) eine kritische Verkehrssituation und/oder einen Notfall zu identifizieren.
Eine besonders vorteilhafte Ausführungsvariante sieht vor, dass ein Radarsystem als Sensor eingesetzt wird. Ein derartiges Radarsystem kann z.B. auch bei Nebel sicher das Auftreten eines Hindernisses detektieren, welches ggf, ursächlich für eine kritische Verkehrssituation sein kann. Ferner ist es möglich, den Abstand zu einem vorausfahrenden oder nachfolgenden Fahrzeug auch beim Durchfahren einer Kurve zuverlässig festzustellen und dabei auftretende Gefahrenzustände zu identifizieren.

Die Sensoren sind vorzugsweise über einen CAN-Bus mit dem Ausgabesystem oder dem entsprechenden System, das die Gegenmaßnahmen einleiten soll, verbunden und werden bei Kurvenfahrt so dynamisch angesteuert, dass ihre Ausrichtung dem künftigen Richtungsverlauf der Fahrt entspricht.

Idealerweise besitzt das Fahrzeug eine Kombination verschiedener Sensoren etc., von denen die gesamte Umgebung des Fahrzeuges wahrgenommen und analysiert wird. Auf Basis der Analysendaten können nun mit entsprechenden Programmen z.B. unter Zuhilfenahme eines Bordcompüters Hinweise oder Signale für den umgehenden Straßenverkehr ausgearbeitet werden, die die anderen Verkehrsteilnehmer auf besondere Situationen im Stra-βenverkehr und/oder Notfälle aufmerksam machen sollen.

Tritt eine kritische Verkehrsituation, z.B. ein plötzlich auftauchendes Hindernis auf der Fahrbahn, auf, so wird diese Verkehrssituation im Idealfall von dem Sensor erkannt und von der Analyseeinheit, z.B. dem Bordcomputer, als solche identifiziext. Diese Informationen werden von der Signalausgabeeinrichtung an die nachfolgenden Fahrzeuge weitergeleitet. Rezipient dieser Informationen kann der Fahrer dieses Fahrzeugs oder dessen Bordelektronik sein.

Zur Weiterleitung der Informationen an die Bordelektronik folgender Fahrzeuge ist ein Sender vorgesehen, der die Daten an einen Empfänger im Folgefahrzeug sendet. Die mittels dieses Empfängers aufgenommenen Informationen können dann durch einen Bordcomputer des nachfolgenden Fahrzeugs verarbeitet und entweder auf dem Display des nachfolgen Fahrzeugs dem Fahrzeugführer übermittelt oder in direkte Steuerbefehle an die Fahrzeugelektronik, z.B. das Einleiten eines Bremsvorgangs, des nachfolgenden Fahrzeugs oder beides umgesetzt werden. So kann erreicht werden, dass auch bei gestörter Sichtlinie, z.B. wenn hinter einer Kurve plötzlich ein Hindernis auftaucht, das eine scharfe Bremsung erforderlich macht, das nachfolgende Fahrzeug bereits eine Bremsung einleitet, ohne dass das Hindernis oder die Reaktion des führenden Fahrzeugs darauf für den Fahrer des nachfolgenden Fahrzeugs erkennbar sein muss.

Vorteilhafte Ausführungen solcher Sende/Empfangseinrichtungen verwenden hochfrequente elektromagnetische Wellen oder Ultraschall. Speziell sind sie beispielsweise in Bluetooth-Technologie realisierbar. Die Sendeeinrichtung kann auch in Verbindung mit einem Mobilfunknetz stehen.

Für die Informationsübermittlung an den Fahrer des nachfolgenden Fahrzeugs ist eine optische Signalausgabeeinrichtung eine vorteilhafte Ausführung der erfindungsgemäßen Signalvorrichtung für Fahrzeuge zur Signalgebung an den nachfolgenden Verkehr. Eine solche kann aus einem oder mehreren Displays bestehen, welche sich im Heckbereich eines Kraftfahrzeuges befinden. Ein zusätzliches Display kann im Sichtbereich des Fahrers, z.B. im Armaturenbrett, vorhanden sein, welches diesen über die Anzeige im Heckbereich und natürlich auch über die Verkehrssituation selber informiert. Es ist auch denkbar, dass diese Informationen über Bordlautsprecher an den Fahrer weitergegeben werden können.

Das auf dem Display erscheinende Signal kann aus einer Schrift, aus einem Zeichen oder auch aus Symbolen bestehen-Variiert werden kann z.B. zusätzlich die Farbe und die Leuchtintensität der Schrift. So kann das Signal, um besondere Aufmerksamkeit zu erregen, blinkend und/oder in heller Schrift erfolgen.

Die Signalvorrichtung kann im Dauerbetrieb betrieben werden oder durch besondere Vorgänge im straßenverkehr, wie z. B. wenn die Sensoren das Auftauchen eines Hindernisses melden, aktiviert werden.

In Kombination mit einem GPS-System erlaubt es das System, dass Signale, die als geschriebene Nachrichten erscheinen, in der jeweiligen Landessprache des momentanen Standortes des Fahrzeuges, das mit einer entsprechenden Signalvorrichtung ausgerüstet ist, erscheinen.

Weitere vorteilhafte Ausgestaltungen sehen vor, dass auch die direkte Kommunikation zwischen Fahrern unter Verwendung der Signalvorrichtung möglich ist und dass die Signalvorrichtung Informationen an einen entfernten Empfänger versenden kann - etwa an eine Notrufzentrale, die dann gleich Informationen zum Unfall erhält- oder dass sie Informationen von einem entfernten Sender empfangen kann, z.B. Verkehrsinformationen von einem Radiosender.

Ein Ausführungsbeispiel der Erfindung wird nunmehr anhand der Zeichnung näher beschrieben. Es zeigen:
- Figur 1: die Front eines Fahrzeuge mit einer erfindungsgemäßen Signalvorrichtung.
- Figur 2: das Heck eines Fahrzeugs mit einer erfindungsgemäßen Signalvorrichtung.
- Figur 3: eine beispielhafte Gefahrensituation im Straßenverkehr

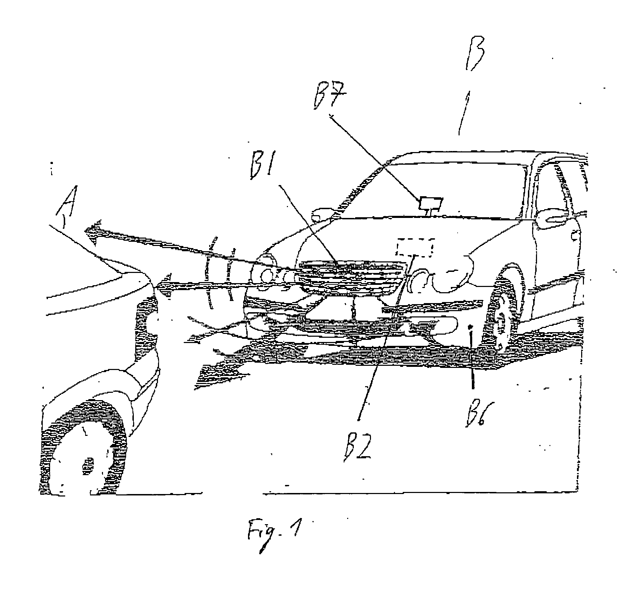

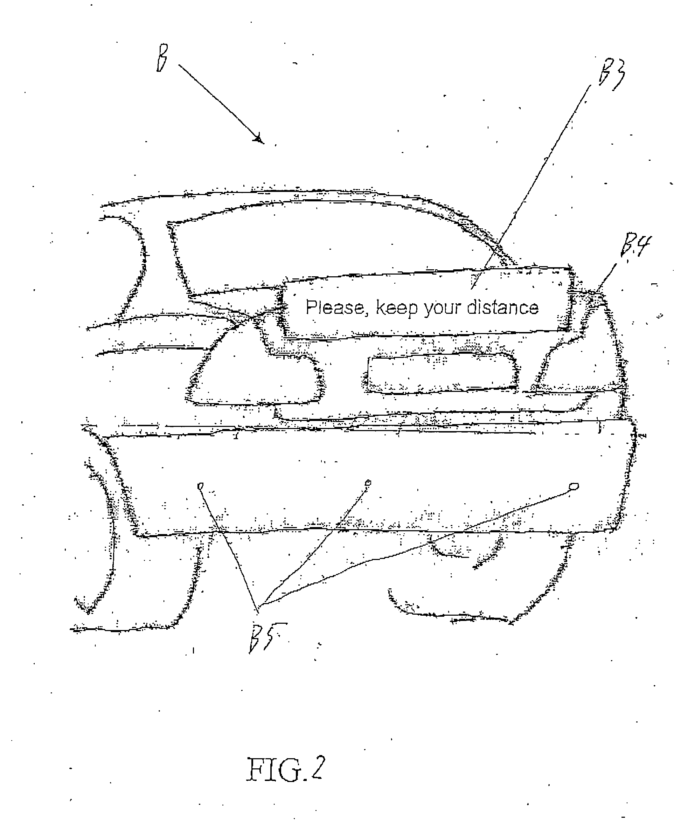

Es wird davon ausgegangen, dass ein übliches Kraftfahrzeug B mit einer erfindungsgemäßen Signalvorrichtung ausgestattet ist. Beispielhaft umfasse die in den Figuren 1 und 2 abgebildete erfindungsgemäße Signalvorrichtung einen Abstandssensor B1, angeordnet im Frontbereich des Kraftfahrzeugs B, einen Bordcomputer B2, und sowohl ein Display B3, welches im Bereich einer Heckklappe B4 montiert.und für den nachfolgenden Verkehr sichtbar angeordnet ist als auch eine Sendeeinheit B5 und eine Empfangseinheit B6, die in Kommunikation mit dem Bordcomputer B2 stehen nebst einer Anzeige im Fahrzeuginnenraum B7.

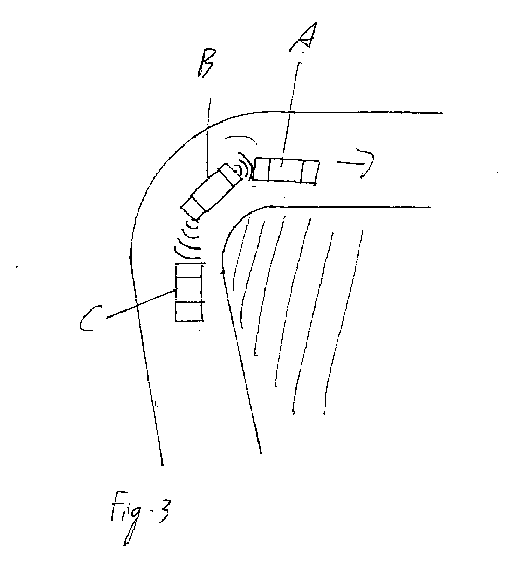

Es wird weiter davon ausgegangen, dass die in Figur 3 abgebildete Verkehrssituation gegeben ist: In einer unübersichtlichen Kurve fährt ein Kraftfahrzeug A vor dem Kraftfahrzeug B und ein äquivalent ausgestattetes Kraftfahrzeug C, das mit einer zur Sendeeinheit B5 des Kraftfahrzeugs B korrespolldierenden Empfangseinheit C6 ausgestattet ist folgt dem Kraftfahrzeug B. Der Abstandssensor B1 detektiert den Abstand des Fahrzeugs B vom Kraftfahrzeug A. Registriert der Bordcomputer B2 eine plötzliche Verringerung des Abstandswerts, so wird eine Weitergabe von Informationen an den nachfolgenden Verkehr C initiiert. Diese erfolgt einerseits visuell an den Fahrer des Kraftfahrzeugs C über das Display B3. Falls der Bordcomputer B2 mit einem GPS-System in Verbindung steht, kann dies auch in der jeweiligen Landessprache erfolgen. Die weitergegebene Information wird auch auf der Anzeige B7 dem Führer des Fahrzeugs B zur Kenntnis gebracht.

Andererseits werden die entsprechenden Abstandsdaten aber auch mittels der Sendeeinheit B5 an die Empfangseinheit C6 übermittelt und vom Bordcomputer C2 verarbeitet. Dieser leitet einerseits die Information über die Anzeige C7 - beispielsweise durch die Meldung "stockender Verkehr"- an den Führer des Fahrzeugs C weiter und andererseits einen Bremsvorgang ein.

Mit der vorliegenden Erfindung gelingt es, dem Fahrer eines Fahrzeuges ein System zur Verfügung zu stellen, mit dessen Hilfe eine automatisierte Weitergabe von Informationen an den nachfolgenden Verkehr möglich ist und auf eine der Situation angepasste Fahrweise hingewirkt werden kann.

### Bezugszeichenliste

- A, B, C: Kraftfahrzeuge

- B1: Sensoreinrichtung
- B2: Bordcomputer
- B3: Display
- B4: Heckklappe
- B5: Sendeeinheit
- B6: Empfangseinheit
- B7: Anzeige im Innenraum

- C2: Bordcomputer
- C6: Empfangseinheit
- C7: Anzeige im Innenraum

## Patentansprüche

1. Signalvorrichtung für ein Fahrzeug B zur Signalgebung, die eine im wesentlichen in Fahrtrichtung gerichtete Sensoreinrichtung (B1) aus mindestens einem Sensor, eine Einrichtung zur automatisierten Analyse der von der Sensoreinrichtung ermittelten Daten und Gewinnung von Informationen (B2) und einer Signalausgabeeinrichtung (B3,B6) zur Weitergabe von durch diesen Sensor gewonnenen Informationen umfasst,
**dadurch gekennzeichnet, dass** die Signalausgabevorrichtung (B3, B6) weiterhin Mittel zur Weiterleitung der aus den Daten der Sensoreinrichtung gewonnenen Informationen an ein nachfolgendes Fahrzeug umfasst.

2. Signalvorrichtung nach Anspruch 1,
**dadurch gekennzeichnet, dass** die Signalausgabeeinrichtung (B3, B6) Mittel zur Weiterleitung der aus den Daten der Sensoreinrichtung gewonnenen Informationen an die Steuerelektronik des nachfolgenden Fahrzeugs umfasst.

3. Signalvorrichtung nach Anspruch 2, **dadurch ge-kennzeichnet, dass** die Signalausgabeeinrichtung (B3, 36) einen Sender (B6) für hochfrequente elektromagnetische oder Schall-Wellen umfasst.

4. Signalvorrichtung nach Anspruch 3,
**dadurch gekennzeichnet, dass** die Signalausgabeeinrichtung einen zum Versand der Informationen mittels Bluetooth-Technologie geeigneten Sender und/oder einen mit einem Mobilfunknetz in Verbindung stehenden Sender umfasst.

5. Signalvorrichtung nach einem der Ansprüche 1 bis 4,
**dadurch gekennzeichnet, dass** die Signalausgabeeinrichtung (B3, B6) Mittel zur Weiterleitung der aus den Daten der Sensoreinrichtung gewonnenen Informationen an den Führer des nachfolgenden Fahrzeugs umfasst.

6. Signalvorrichtung nach Anspruch 5,
**dadurch gekennzeichnet, dass** die Einrichtung zur automatisierten Analyse der vom Sensor ermittelten Daten und Gewinnung von Informationen (B2) mit einem GPS-System verbunden ist, wodurch die Landessprache am aktuellen Fahrzeugort bestimmbar und die Information in der Landessprache des Landes, in dem sich das Fahrzeug gerade befindet, ausgebbar ist.

7. Signal vorrichtung nach einem der vorangegangenen Ansprüche,
**dadurch gekennzeichnet, dass** die Signalausgabeeinrichtung (B3, B6) eine optische Signalvorrichtung (B3) umfasst, die ein oder mehrere Displays (B3) aufweist, die entweder kontinuierlich oder nur im Bedarfsfalle sichtbar sind.

8. Signalvorrichtung nach Anspruch 7,
**dadurch gekennzeichnet, dass** mindestens ein Display (B3) im hinteren Heckbereich des Fahrzeuges B angeordnet ist,

9. Signalvorrichtung nach einem der vorstehenden Ansprüche,
**dadurch gekennzeichnet, dass** die optische Signalausgabeeinrichtung (B3) zur Ausgabe eines kontinuierlichen oder zur Ausgabe eines blinkenden Signals in unterschiedlicher Farbe und/oder Lichtintensität in Form eines geschriebenen Textes oder in Form von Symbolen geeignet ist.

10. Signalvorrichtung nach einem der vorstehenden Ansprüche,
**dadurch gekennzeichnet, dass** das System Mittel zur zusätzlichen visuellen Information des Fahrers des mit der Sensoreinrichtung ausgestatteten Fahrzeugs (3) über eine Anzeige im Fahrzeuginnenraum (B7) im Sichtbereich des Fahrers oder zusätzlichen alcustischen Information, des Fahrers des mit der Sensoreinrichtung ausgestatteten Fahrzeugs (B) oder zur zusätzlichen akustischen Information des Fahrers des mit der Sensoreinrichtung ausgestatteten Fahrzeugs (B) über die Bordlautaprecher umfasst.

11. Signalvorrichtung nach einem der vorstehenden Ansprüche,
**dadurch gekennzeichnet, dass** die Sensoreinrichtung mindestens einen optischen Sensor, thermischen Sensor, Radarsensor, akustischen Sensor , Feuchtigkeitssensor oder Drucksensor oder eine Kamera umfasst .

12. Signalvorrichtung nach einem der vorstehenden Ansprüche,
**dadurch gekennzeichnet, dass** die Verwendung des CAN-Bus vorgesehen ist.

13. Signalvorrichtung nach einem der vorstehenden
Ansprüche, **dadurch gekennzeichnet, dass** das System Mittel zur Kommunikation zwischen dem Fahrer des mit der Sensoreinrichtung ausgestatteten Fahrzeugs (B) und dem Fahrer des nachfolgenden Fahrzeuges unter Verwendung der Signalausgabeeinrichtung (B3, B6) umfasst.

14. Signalvorrichtung nach einem der vorstehenden Ansprüche,
**dadurch gekennzeichnet, dass** das System Mittel zur Übermittlung von Sensordaten und Informationen an eine Notrufzentrale und/oder die Einspeisung von Informationen von einer entfernten Informationsquelle umfasst.

15. Verfahren zur Weiterleitung der aus den Daten der Sensoreinrichtung gewonnenen Informationen an nachfolgende Fahrzeuge, bestehend aus den Schritten Messung von Daten mittels einer im wesentlichen in Fahrtrichtung gerichteten Sensoreinrichtung (B1) aus mindestens einem Sensor, automatisierte Analyse der von der Sensoreinrichtung ermittelten Daten und Gewinnung von Informationen durch eine Analyseeinrichtung (B2) und Weitergabe der gewonnenen Informationen mittels einer Signalausgabevorrichtung (B3, B6),
**dadurch gekennzeichnet, dass** die Weitergabe der Informationen durch die signalausgabevorrichtung (B3, B6) an die Steuerelektronik und/oder den Führer eines nachfolgenden Fahrzeugs erfolgt.
